# EUROPEAN PATENT APPLICATION

(11) **EP 4 432 405 A1**
(43) Date of publication of application: **18.09.2024**
(21) Application number: 23305339.6
(22) Date of filing: 13.03.2023
(51) Int. Cl.: H01M 8/04014, H01M 8/04007, H01M 8/04089, H01M 8/0668

(54) **FUEL CELL INSTALLATION COMPRISING A SOLID OXIDE FUEL CELL SYSTEM AND METHOD OF OPERATING THE SAME**

(71) Applicant: Technip Energies France, 92741 Nanterre Cedex (FR)
(72) Inventor: PAWAR, Dhairyasheel, 92741 NANTERRE CEDEX (FR); SIPPEL, Julien, 92741 NANTERRE CEDEX (FR)
(74) Representative: McWilliams, David John

(57) **Abstract**

The invention relates to a fuel cell installation (10) comprising:
- a solid oxide fuel cell unit (30) comprising a first inlet for introducing a heated fuel feed flow (50), a second inlet for introducing a heated oxygen-rich gas flow (52), a first outlet for recovering an anodic gas flow (18), and a second outlet for recovering a cathodic gas flow (20),
- a first heat exchanger system (42) for heating a fuel feed flow and a second heat exchanger system (44) for heating the oxygen-rich gas flow, each heat exchanger system comprising an enclosure (420, 440) defining a vertical circulation pipe (422, 442) and a tube bundle system arranged in the circulation pipe.

Each of the first and second outlet emerges at the bottom of the circulation pipe of the first, respectively second, heat exchanger system so that the anodic, respectively cathodic, gas flow circulates from bottom to top in crossflow through the or each tube bundle (74) of the first, respectively second, heat exchanger system.

## Description

### FIELD

The present invention concerns a fuel cell installation for the production of an electric current by electrochemical reaction between a combustible fluid and dioxygen of the air.

The fuel fluid is typically a mixture of gas such as hydrogen, carbon monoxide, methane, propane, butane, fermentation gases, gasified biomass, and/or paint vapors. The fuel may also consist of a liquid fuel such as methanol, ethanol or fuel, in particular such as diesel or gasoline.

The fuel cell system typically consists of one or more solid oxide fuel cells (SOFC).

Such cells are mainly intended for stationary applications with an output power ranging from 1 kW to several MW.

### BACKGROUND

A SOFC element generally consists of four layers, three of which are ceramics. A single cell consisting of the four superposed layers has a typical thickness of a few millimeters. Tens of such cells are then superimposed in series to form a stack.

In such cells, oxygen ions, which are formed on the cathode side due to electrochemical reduction of molecular oxygen (dioxygen of air), are conducted through a solid oxide membrane used as an electrolyte at high temperature, in order to react with the gaseous fuel, e.g. hydrogen, on the anode side which is diffused through the anode to the anode/electrolyte interface.

Such electrochemical reaction leads to the release of electrons that are transported through external circuit to produce electricity. The formation of carbon dioxide and water, also occurs resulting from the electrochemical reaction.

Carbon dioxide CO₂ is, however, one of the main greenhouse gases, the release of which into the atmosphere are responsible for global warming. In order to reduce the environmental impact of fuel cells, it is therefore necessary to minimize the release of carbon dioxide into the atmosphere.

Moreover, although the electrochemical reaction between oxygen ions and the fuel is complete, the amount of oxygen ions generated in the SOFC element is insufficient for consuming the entire (re-formed) fuel. A large quantity of non-consumed fuel is thus necessarily recovered at the outlet of the SOFC element. The conversion rate of the liquid fuel in a SOFC element is conventionally on the order of 60%.

In the known installations, a portion of the gas leaving the anode, comprising the carbon dioxide formed, is recycled toward the anode of the cell in order to consume the portion of fuel which did not react, thus increasing the efficiency of the cell. The remaining portion of the flow leaving the anode is sent into a catalytic burner wherein same is burned with the oxygen-depleted air flow recovered at the outlet of the cathode of the SOFC element.

In order to recover the carbon dioxide present in industrial effluents, it is known how to inject same into a carbon dioxide capture unit. In such a configuration, close to a conventional smoke extraction system, the carbon dioxide capture unit is placed after the catalytic burner so as to treat the flow coming out of the burner. Same thus forms a post-treatment module for effluents, before the discharge thereof from the installation. The carbon dioxide capture unit is not integrated into the fuel cell installation. In particular, herein, the output flow from the carbon dioxide capture unit is not reinjected into the installation.

Furthermore, the concentration of carbon dioxide in the gas coming out from the catalytic burner is very low, typically less than or equal to 8 % molar. Indeed, the portion of the anodic flow introduced into the catalytic burner is mixed with oxygen-depleted air coming out of the cathode. Such mixing step then has the effect of significantly reducing the concentration of carbon dioxide in the effluents to be treated. The recovery of carbon dioxide present in such a low concentration requires the use of a liquid solvent with a very high regeneration rate, typically the use of a perfectly regenerated liquid solvent, which means a very high energy consumption. Moreover, the oxygen in the air present after the burner can lead to problems of degradation of the liquid solvent, especially the amine compound.

Such installations further require expensive and very bulky equipment such as a stripping column, along with reboiling and condensation systems.

Apart from the recovery of the reaction products, another issue is the SOFC operating pressures and temperatures. SOFC structure usability and durability at high pressure limit the SOFC application to pressure level lower than 3 atm. This pressure level has impact on the sizing of the installation since at lower pressure the volumetric flows are higher and thus it results in larger equipment sizing, affecting the applicability of SOFC in area constraint applications such as marine transport, onshore applications and for offshore applications. Furthermore, SOFC operates at high temperatures, typically in the order of 800°C. The fuel used in the SOFC must thus be pre-heated to about 600°C, making it necessary to use additional heating systems that are both energy and space-consuming.

### SUMMARY OF THE INVENTION

The goal of the invention is thus to provide a fuel cell installation allowing an efficient and reliable production of an electric current, with reduced energy consumption and footprint.

To this end, the subject matter of the invention is a fuel cell installation comprising :
- a solid oxide fuel cell unit comprising an anode system, a cathode system, a first inlet for introducing a heated fuel feed flow, a second inlet for introducing a heated oxygen-rich gas flow, a first outlet for recovering an anodic gas flow, and a second outlet for recovering a cathodic gas flow,
- a first heat exchanger system for heating a fuel feed flow, the first heat exchanger system comprising an enclosure defining a vertical circulation pipe for the anodic gas flow and a tube bundle system comprising at least one tube bundle arranged in the circulation pipe, the at least one tube bundle comprising a plurality of tubes intended to convey the fuel feed flow through the circulation pipe to the first inlet;
- a second heat exchanger system for heating the oxygen-rich gas flow, the second heat exchanger system comprising an enclosure defining a vertical circulation pipe for the cathodic gas flow and a tube bundle system comprising at least one tube bundle arranged in the circulation pipe, the at least one tube bundle comprising a plurality of tubes intended to convey the oxygen-rich gas flow through the circulation pipe to the second inlet ;

the first outlet emerging at the bottom of the circulation pipe of the first heat exchanger system so that the anodic gas flow circulates from bottom to top in crossflow through the or each tube bundle of the first heat exchanger system,
and the second outlet emerging at the bottom of the circulation pipe of the second heat exchanger system, so that the cathodic gas flow circulates from bottom to top in crossflow through the or each tube bundle of the second heat exchanger system.

The vertically arranged installation of the first and second heat exchanger systems allows an efficient utilization of the heat generated by the fuel cell unit and the reduction of the temperature of the flows produced by the same, while having a reduced footprint thanks to the stacking of the heat exchangers and of the fuel cell unit.

The installation according to the invention can comprise one or a plurality of the following features, taken alone or in any technically possible combination:
- each tube bundle comprises a plurality of rows of tubes arranged above one another;
- the first and/or the second heat exchanger system comprise several tube bundles arranged at different levels located above one another along an elevation axis in the circulation pipe;
- the tubes of at least one, preferably each, tube bundle comprise a tube body having an outer surface and a plurality of external fins extending radially from the tube body outer surface;
- the fins are arranged along the tube body at a constant pitch comprised between 2.5 mm and 10 mm;
- each fin annular plate shape and extends over a fin height comprised between 2 mm and 20 mm;
- the oxygen-rich gas is air, the installation further comprising a pump and compressor system for conveying atmospheric air into the tube bundle system of the second heat exchanger system;
- the first heat exchanger system comprises a deported tube bundle for conveying the oxygen-rich gas flow, said deported tube bundle being received in the first circulation pipe;
- the installation further comprises a carbon capture unit configured to recover at least part of the anodic gas flow at the top of the first heat exchanger system and to inject a recycled flow into the tube bundle system of the first heat exchanger system;
- the installation further comprises a supplemental furnace for preheating a fuel gas flow before its introduction into the first heat exchanger system.

The invention further relates to a method of operating a fuel cell installation as define above, comprising the following steps:
- circulating a fuel feed flow and a oxygen-rich gas flow respectively in the tube bundle system of the first and second heat exchanger systems to obtain a heated fuel feed flow and a heated oxygen-rich gas flow ;
- continuously feeding the solid oxide fuel cell unit with the heated fuel feed flow injected into the anode system and with the heated oxygen-rich gas flow injected into the cathode system ;
- recovering at the first outlet of the fuel cell unit a carbon dioxide-rich anodic gas flow and at the second outlet an oxygen-depleted cathodic gas flow ;
- circulating the anodic gas flow and the cathodic gas flow in the circulation pipe of respectively the first and second heat exchanger systems from bottom to top in crossflow through the or each tube bundle.

The method according to the invention can comprise one or a plurality of the following features, taken alone or in any technically possible combination
- the heated fuel feed flow and the heated oxygen-rich gas flow are injected in the solid oxide fuel cell unit at a pressure of at most 3 bara (absolute bar), more preferentially ranging from 1 to 2 bara (absolute bar);
- the heated fuel feed flow and the heated oxygen-rich gas flow are injected in the solid oxide fuel cell unit at a temperature ranging from 700°C to 900°C;
- after circulating in the circulation pipe of the second heat exchanger system, at least a portion of the cathodic gas flow is discharged into the atmosphere;
- after circulating in the circulation pipe of the first heat exchanger system, the anodic gas flow is collected in a carbon capture unit.

### BRIEF DESCRIPTION OF THE DRAWINGS

The invention will be better described upon reading the description which follows, given solely as an example, and made with reference to the enclosed drawings, wherein:
- Figure 1 is a schematic diagram of an installation according to the invention;
- Figure 2 is a schematic diagram describing the pretreatment unit of the installation shown in Figure 1;
- Figure 3 is a sectional view of a tube bundle of the installation shown in Figures 1 and 2; and
- Figure 4 is a perspective view of a tube of the tube bundle of Figure 3.

### DETAILED DESCRIPTION

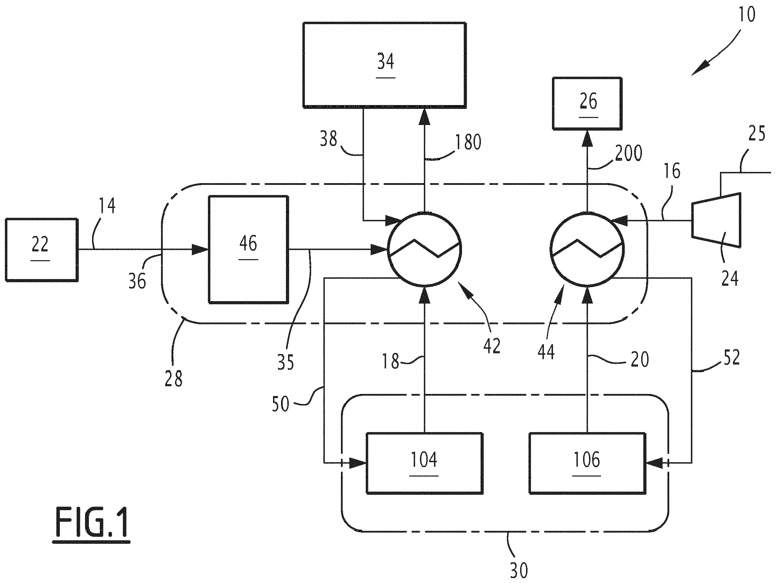

An installation 10 according to the invention is shown schematically in Fig. 1.

The installation 10 is intended for the production of an electric current from a fuel gas flow 14 and an oxygen-rich gas flow 16.

The installation 10 is also intended for the recovery, as effluents, of an anodic gas flow 18 and of a cathodic gas flow 20, also called oxygen-depleted gas flow 20.

The anodic gas flow 18 typically contains hydrogen, water vapor, carbon monoxide, carbon dioxide, some unreacted hydrocarbon gas, such as methane and other reaction byproducts and impurities.

The cathodic gas flow 20, also called oxygen-depleted cathodic gas flow 20, is oxygen-depleted air.

The installation 10 may be used for on-shore, off-shore or marine applications.

The installation 10 is connected upstream to a storage unit 22 intended for storing the fuel gas. Alternatively, the storage unit 22 can be replaced by a gas distribution network for conveying the fuel gas 14 into the installation 10 according to the invention.

When the oxygen-rich gas 16 is air, the installation 10 preferably comprises a pump and compressor system 24 for conveying atmospheric air 25, compressed if appropriate, into the installation 10 according to the invention.

Alternatively, the pump and compressor system 24 can be replaced by an additional storage system (not shown).

The fuel gas flow 14 typically comprises hydrogen; carbon monoxide; natural gas containing mainly methane along with lower amounts of ethane, propane, butane and heavier hydrocarbons; fermentation gases; gasified biomass; paint vapors or any of the mixtures thereof. Preferentially, the fuel gas flow 14 is a methane flow.

Preferentially, the fuel gas flow 14 coming from the storage unit 22 is at a pressure ranging from 1 atm to 3 bara (absolute bars), more preferentially from 1 atm to 1.5 bara (absolute bars).

The oxygen-rich gas flow 16 typically has a concentration of oxygen of at least 10% by volume, preferentially from 15% to 25% by volume of oxygen. Advantageously, the oxygen-rich gas flow 16 is an air flow.

Preferentially, the oxygen-rich gas flow 16 coming from the pump and compressor system 24 is at a pressure ranging from 1 atm to 3 bara (absolute bars).

The installation 10 is connected downstream to a collecting installation 26 for collecting at least part the oxygen-depleted gas flow 20 for post-treatment or for discharging the oxygen-depleted gas flow 20 directly into the atmosphere.

Preferentially, the oxygen-depleted gas flow 20 is discharged directly into the atmosphere at the collecting installation 26.

Alternatively, the oxygen-depleted gas flow 20 is collected in the installation 26 in order to be conveyed to another installation where same will be consumed or converted.

The installation 10 comprises a pretreatment unit 28, intended for pre-heating the incoming gas flows 14, 16, and a fuel cell unit 30. Preferably, the installation 10 further comprises a carbon capture unit 34 for sequestering carbon dioxide produced by the fuel cell unit 30.

The storage unit 22 (or the gas distribution network) is connected to an inlet 36 of the pretreatment unit 28 so that the fuel gas flow 14 is injected into the pretreatment unit 28.

Before the introduction thereof into the fuel cell unit 30, the fuel gas flow 14 is advantageously mixed with a recycled flow 38 recovered at an outlet of the carbon capture unit 34 in order to form a fuel feed flow. The nature of the recycled flow 38 is described in detail hereinafter.

The pretreatment unit 28 is intended for forming and preheating the fuel feed flow to form a heated fuel flow 50 before it is introduced into the fuel cell unit 30. The pretreatment unit 28 is also intended for preheating the oxygen-rich gas flow 16 to form a heated oxygen-rich gas flow 52 before it is introduced into the fuel cell unit 30.

The fuel cell unit 30 is intended for producing the electric current from the heated fuel flow 50 and the heated oxygen-rich gas flow 52 in order to form the anodic gas flow 18 and the cathodic gas flow 20 at the outlet.

Finally, the carbon capture unit 34 is intended for recovering at least part of the anodic gas flow 18 and for forming the recycled flow 38

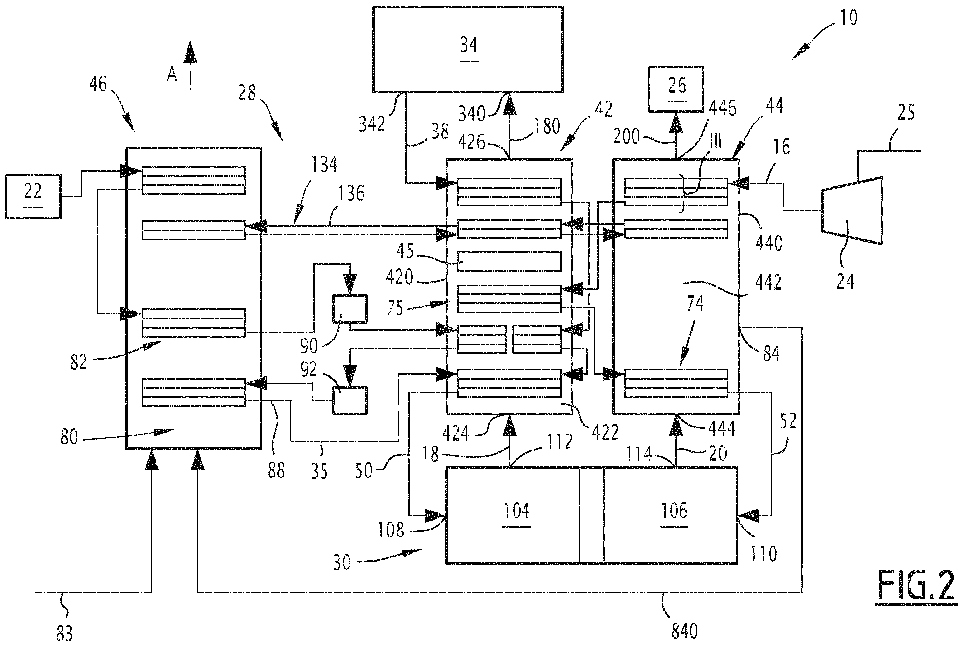

The pretreatment unit 28 is shown in more details on Figure 2.

The pretreatment unit 28 comprises a first heat exchanger system 42 (also called first heat exchanger 42) intended for heating the fuel feed flow and a second heat exchanger system 44 (also called second heat exchanger 44) intended for heating the oxygen-rich gas flow 16, before the introduction thereof into the fuel cell unit 30.

Preferably, the pretreatment unit 28 comprises a supplemental furnace 46.

As defined in the invention, a heat exchanger system comprises at least one heat exchanger. A heat exchanger system can thus comprise one heat exchanger or a plurality of heat exchangers associated with each other.

Each heat exchanger system 42, 44 includes an enclosure 420, 440 defining a vertical circulation pipe 422, 442 for a gas flow along a circulation axis, extending vertically between a gas inlet 424, 444 and a gas outlet 426, 446. The vertical circulation axis is substantially parallel to a vertical elevation axis A. By "substantially parallel", we mean that the circulation axis and the vertical elevation axis define together an angle of less than 5°.

As visible on Figure 2, the gas outlets 426, 446 of each enclosure 420, 440 are located above the gas inlet 424, 444. More precisely, the gas inlet 424, 444 are arranged at the bottom of enclosure 420, 440 and the gas outlets 426, 446 are located at the top of the enclosure 420, 440.

The gas flow penetrating the enclosure 420, 440 through the gas inlet 424, 444 has typically a temperature comprised between 700 ⁰C and 900 ⁰C, preferably around 800°C and is under a pressure comprised between 1 atm and 3 bara (absolute bars). As it will be described later, the gas flow penetrating the enclosure 420, 440 through the gas inlet 424, 444 are respectively the anodic gas flow 18 and the cathodic gas flow 20.

After passage in the heat exchanger, the gas flow extracted through the gas outlet 426, 446 has a lower temperature than at the gas inlet 424, 444. The gas flow extracted from the enclosure through the gas outlet 426, 446 has typically a temperature comprised between 700 ⁰C and 900 ⁰C, preferably around 800°C and is under a pressure comprised between 1 atm and 3 bara (absolute bars).

Each heat exchanger system 42, 44 further includes a tube bundle system comprising at least one tube bundle 74 passing through the circulation pipe 422, 442 in order to circulate the flow to be heated through said circulation pipe 422, 442. Each heat exchanger system 42, 44 typically comprises between 1 and 10 tube bundles 74.

Each heat exchanger system 42, 44 may further optionally comprise one fan (not shown), capable of producing the driving of the gas flow through the circulation pipe 422, 442 around the tubes of the tube bundle 74.

Each tube bundle 74 comprises a plurality of tubes 740 intended to convey the flow to be heated by the heat exchanger system 42, 44. The tubes 740 are capable of placing the flow to be heated in a contactless heat exchange relationship with the gas flow circulating in the circulation pipe 422, 442.

In this example, the tubes 740 of each tube bundle 74 extend transversely relative to the vertical circulation axis. The tubes 740 are arranged parallel to one another at several rows R1 to Rn along the circulation axis. The tubes 740 of each tube bundle 74 extend horizontally on several rows R1 to Rn located above one another along the vertical circulation axis.

Each tube bundle 74 may comprise the same number of tubes 740 or different numbers of tubes 740. Typically, each tube bundle 74 comprises between 50 and 500 tubes 740, arranged in 2 to 30 rows.

Each tube bundle 74 may be single pass or multi-pass.

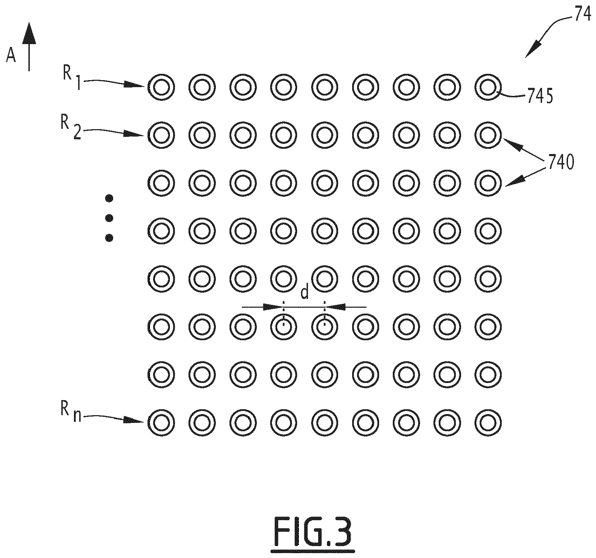

In a preferred embodiment, shown on Figure 3, the tube 740 of a tube bundle 74 are regularly laid out, so that they define a tube pitch d, corresponding to the shortest distance between the centers of two adjacent tubes 740, that is substantially constant. The tube pitch d ranges preferentially from 60 mm to 150 mm.

In a variant not shown, horizontal and vertical tube pitch may be different.

In a variant not shown, the tubes are staggered.

Each heat exchanger system 42, 44 may comprise several tube bundles 74 arranged at a same level in the circulation pipe 422, 442.

Advantageously, as shown in the example of Figure 2, each heat exchanger system 42, 44 comprises several tube bundles 74 arranged at different levels located above one another along the vertical circulation axis in the circulation pipe 422, 442.

In a preferred embodiment, the number of tube bundles 74 and/or of tubes 740 per tube bundles 74 decreases along the vertical circulation axis between the bottom and the top of the enclosure 420, 440. In other words, the number of tube bundles 74 and/or of tubes 740 per tube bundles 74 is higher near the gas inlet 424, 444 than near the gas outlet 426, 446, improving heat exchanges between the flows.

In a preferred embodiment, the number of tubes 740 per tube row decreases along the vertical circulation axis between the bottom and the top of the enclosure 420, 440. In other words, the width of enclosure 420, 440 is bigger near the gas inlet 424, 444 than near the gas outlet 426, 446, improving heat exchanges between the flows.

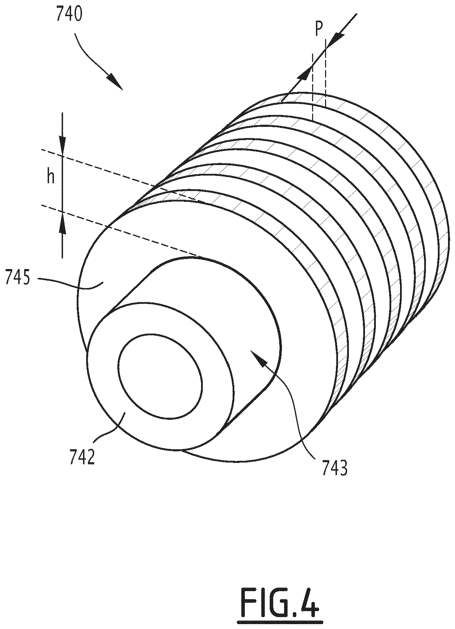

Preferably, as shown in more details in Figure 4, each tube 740 comprises a tube body 742, having an outer surface 743 and defining a central passageway for the flow to be heated, and a plurality of external annular fins 745 extending radially from the tube body outer surface 743.

The tube body outer surface 743 is preferably smooth. In a variant, the outer surface may comprise corrugations in addition to the fins.

In a variant not shown, the tube body 742 may comprise internal corrugations on its inner surface.

The tube body 742 is preferably made of metal, for example of stainless steel.

The fins 745 may be worked in the mass of the tube body 742 or attached to the outer surface 743, for example by welding.

The fins 745 are substantially parallel to each other and arranged at predetermined intervals p (fin pitch p) to form passageways in which the gas flow circulating between the gas inlet 424, 444 and the gas outlet 426, 446 is to flow.

The fins 745 are arranged along the tube body 742 at a constant fin pitch p, for example comprised between 2.5 mm and 10 mm. Alternatively, the fin pitch p is not constant. As shown on Figure 4, the fin pitch p is represented by the center-to-center distance in the thickness direction of the two adjacent fins 745.

The fins 745 have an annular plate shape, for example an annular flat plate shape, and define a fin height h extending radially from the tube body outer surface 743, the fin height h being comprised between 2 mm and 20mm.

Such an arrangement allows the anodic gas flow 18 and the cathodic gas flow 20 coming from the fuel cell unit 30 to exchange heat with the incoming fuel and incoming air in cross current way, enhancing the heat transfer while requesting a smaller heat exchange area compared to a shell and tube type heat exchanger.

In particular, the flow circulating in the tube bundles 74 of the first heat exchanger 42 is pre-heated by the anodic gas flow 18 coming from the fuel cell unit 30. The oxygen-rich gas flow 16 circulating in the tube bundles 74 of the second heat exchanger 44 is pre-heated by the cathodic gas flow 20 coming from the fuel cell unit 30.

In a variant (not shown), the fins have a non-flat shape. For example, the fins have structured surfaces.

Advantageously, as visible on Figure 2, the first heat exchanger 42 further comprised a water gas shift reactor 45 arranged in the circulation pipe 422. The water gas shift reactor 45 is configured to produce hydrogen from carbon monoxide present in the anodic gas flow 18. Water gas shift reactors are known to a person skilled in the art and will therefore not be discussed here in further detail.

Advantageously, the first heat exchanger 42 and/or the second heat exchanger 44 comprise a deported tube bundle 75 connected to the tube bundles 74 of the other heat exchanger.

In the example shown on Figure 2, a deported tube bundle 75 for conveying the oxygen-rich gas flow 16 is arranged in the circulation pipe 422 of the first heat exchanger 42 below the water gas shift reactor 45. Part of the oxygen-rich gas flow 16 is thus pre-heated by the anodic gas flow 18. Maximum heat can thus be recovered from the anodic gas flow 18 in the first heat exchanger 42 to preheat the flow circulating in the deported tube bundle 75 and to cool the anodic gas flow 18 so that it reaches desired temperature level before it is fed into the water gas shift reactor 45.

In a preferred embodiment, the pretreatment unit 28 further comprises a supplemental furnace 46 for preheating the fuel gas flow 14 before its introduction in the first heat exchanger 42.

The supplemental furnace 46 comprises a burner 80 along with a third heat exchanger system 82.

The supplemental furnace 46 is connected to a fuel gas source (not shown) so that fuel gas 83 is injected into the burner 80 in order to be burned therein. Alternatively or in complement, the supplemental furnace 46 is connected to the carbon capture unit 34 so that a portion of a carbon dioxide recovered by the carbon capture unit 34 is reinjected in the burner 80.

Preferentially, as shown in Figure 2, the second heat exchanger system 44 further comprises an outlet 84 connected to the burner 80 so that a portion 840 of the cathodic flow 20 circulating in the circulation pipe 442 is injected into the burner 80 and burned therein.

According to the embodiment shown in Figure 2, the storage unit 22 is connected to the third heat exchanger system 82 located in the furnace 46 so that the fuel gas flow 14 is heated by the heat generated by the combustion inside the burner 80, in order to form a pre-heated fuel gas flow 35. The furnace 80 thus comprises an outlet 88 for recovering the pre-heated fuel gas flow 35.

The outlet 88 of the furnace 80 is connected to the tube bundle system of the first heat exchanger system 42 so that the pre-heated fuel gas flow 35 is mixed with the recycled flow 38 coming from the carbon capture unit 34.

Preferentially, the third heat exchanger 80 comprises a plurality of tube bundles 74 arranged at different elevation levels within the furnace 46.

Preferentially, the pretreatment unit 28 further comprises, between the supplemental furnace 80 and the first heat exchanger system 42, a desulfurization unit 90 and a pre-reforming unit 92.

The desulfurization unit 90 is intended for absorbing any sulfur present in the fuel gas flow 14, in order to prevent the downstream poisoning of the fuel cell unit 30. Desulfurization units are known to a person skilled in the art and will therefore not be discussed here in further detail.

The pre-reforming unit 92 is intended for forming, from the desulfurized flow, a flow consisting of hydrogen, carbon monoxide, water and a portion of the unreacted initial fuel. In particular, the pre-reforming unit 92 converts hydrocarbons heavier than methane such as ethane, propane, butane and pentane present in the fuel gas flow 14 in order to prevent carbon deposition (or coking) within the fuel cell unit 30. The pre-reforming modules are known to a person skilled in the art and will therefore not be discussed here in further detail.

In the embodiment shown in Figure 2, a first tube bundle 74 of the third heat exchanger is connected upstream the desulfurization unit 90. An outlet of the desulfurization unit 57 is connected to a second tube bundle, which is connected to the pre-reforming unit 92.The pre-reforming unit 92 is connected to a third tube bundle of the third heat exchanger 82.

In this embodiment, the second tube bundle 74 is arranged within the enclosure 420 of the first heat exchanger system 42, in proximity of a tube bundle 74 in which the recycled flow 38 is circulating. Such arrangement further improves the pre-heating of the recycled flow.

The pretreatment unit 28 may also comprise additional modules intended for removing other pollutants or impurities which would be present in the fuel gas flow 14, such as e.g. mercury. Such modules are known to a person skilled in the art who will know how to integrate same into the installation according to the invention without modifying the operation described herein.

The fuel cell unit 30 is a solid oxide fuel cell unit and comprises at least one anode system 104 and at least one cathode system 106, separated from one another by at least one electrolyte, in particular a solid electrolyte.

As defined by the invention, an anode system (or cathode system) comprises at least one anode (at least one cathode, respectively). An anode system (or cathode system) can thus comprise one anode (cathode respectively) or a plurality of anodes (cathodes respectively) associated with each other.

The fuel cell unit 30 comprises an inlet 108 for introducing the heated fuel flow 50. The inlet 108 is intended for bringing the heated fuel flow 50 into contact with the anode system 104.

The fuel cell unit 30 further includes an inlet 110 for introducing the heated oxygen-rich gas flow 52. In particular, the inlet 110 is intended for bringing the heated oxygen-rich gas flow 52 into contact with the cathode system 106.

The fuel cell unit 30 further includes a first outlet 112 for recovering the anodic gas flow 18, coming from the operation of the fuel cell unit 30 and recovered at the anode system 104.

The fuel cell unit 30 further includes a second outlet 114 for recovering the cathodic gas flow 20, coming from the operation of the fuel cell unit 30 and recovered at the cathode system 106.

The outlets 112, 114 for recovering the anodic and cathodic gas flow 18, 20 are respectively connected upstream to the gas inlets 424, 444 of the first and second heat exchanger systems 42, 44 of the installation 10. In other words, the anodic and cathodic gas flow 18, 20 emerge from the fuel cell unit 30 at the outlets 112, 114, before entering the first and second heat exchanger systems 42, 44.

The first outlet 112 emerges at the bottom of the circulation pipe 422 of the first heat exchanger 42 so that the anodic gas flow 18 circulates within the enclosure 422 from bottom to top in crossflow through and around the or each tube bundle 74. The anodic gas flow 18 is cooled therein by heat exchange with the tube bundles 74 extending within the same enclosure 420, in order to form a cooled anodic flow 180.

The second outlet 114 emerges at the bottom of the circulation pipe 442 of the second heat exchanger 44, so that the cathodic gas flow 20 circulates from bottom to top in crossflow through and around the or each tube bundle 74. The cathodic gas flow 20 is cooled therein by heat exchange with the tube bundles 74 extending within the same enclosure 440, in order to form a cooled cathodic flow 200.

Such embodiment is advantageous in that it can be used to heat the incoming flows before their introduction into the fuel cell unit 30, by heat integration, without requiring external energy input.

In the example of Figure 2, the outlet 426 of the first heat exchanger system 42 is connected to the carbon capture unit 34.

Such embodiment is advantageous in that same makes it possible both to heat the incoming fuel flow, which is a mixture of the recycled flow 38 and of the pre-heated fuel gas flow 35, before the introduction thereof into the fuel cell unit 30, and to cool the anodic gas flow 18, before the treatment thereof in the carbon capture unit 34, by heat integration without requiring external energy input.

Preferably, a post-treatment unit (not shown) is arranged between the first heat exchanger system 42 and the carbon capture unit 34. The post-treatment unit is intended to extract by condensation the excess water from the cooled anodic gas flow 180 and to convert into hydrogen and carbon dioxide at least a portion of the carbon monoxide present in the anodic gas flow 180. The conversion can then be used for increasing the concentration of carbon dioxide in the anodic gas flow 180 in order to facilitate the capture thereof in the carbon capture unit 34.

The carbon capture unit 34 is intended for recovering at least a portion of the carbon dioxide present in the cooled anodic gas flow 180 in the form of a recycled carbon-dioxide depleted flow, which corresponds to the recycled flow 38.

The carbon capture unit 34 typically comprises an inlet 340 for introducing the cooled anodic flow 180 and an outlet 342 for recovering the recycled flow 124.

The outlet 118 for recovering the recycled flow 38 is connected to the pretreatment unit 28, in particular to the tube bundle system of the first heat exchanger 42 so that the carbon dioxide-depleted flow 38 is pre-heated in the first heat exchanger 42

Thus, the heated fuel feed flow 50 entering the fuel cell system 30 consists of a mixture of the pre-heated fuel feed flow 35 coming from the furnace 46 and the carbon dioxide-depleted flow 38.

According to a preferred embodiment, the installation 10 further comprises a closed heat exchange circuit 134 for recovering the heat generated in one or a plurality of parts of the installation 10 in order to be transferred to another portion of the installation 10 so as to use same.

Preferentially, the closed heat exchange circuit 134 is intended for supplying a portion of the heat required for the preheating in the first and second heat exchanger systems 42, 44.

Preferentially, the closed circuit 134 is intended for making flow a heat-transfer fluid 136. The heat-transfer fluid may consist of pressurized liquid water, or further of a heat-transfer oil. The closed circuit 134 allows the recovery of residual heat, which may be used to heat water or oil, which further may be utilized in the carbon capture unit 34.

The operation of the closed heat exchange circuit 134 requires a certain number of additional equipment (not shown, such as one or a plurality of expansion tanks, pumps, valve systems, etc...). Such necessary equipment are well known to a person skilled in the art and will therefore not be described further hereinafter in the description.

The flows described in the installation are merged with the pipes that carry same.

The implementation of an operating method according to the invention will now be described.

The method according to the invention comprises first of all supplying at least one fuel gas flow 14, coming from the storage unit 22 (or from a gas pipe network), and at least one oxygen-rich gas flow 16, coming from the pump and compressor system 24 (or from another storage system).

The fuel gas flow 14 is first introduced into the pretreatment unit 28 in order to be heated and pre-treated.

Advantageously, to this end, the fuel gas flow 14 is introduced into the supplemental furnace 46 and heated for the first time.

Preferentially, when entering the furnace 46, the fuel gas flow 14 has a temperature ranging from 0°C to 50°C, more preferentially from 10°C to 30°C.

Preferentially, the fuel gas flow 14 is heated in the third heat exchanger 82 to a temperature ranging from 400°C to 800°C, preferentially ranging from 600°C to 750°C.

Advantageously, during the preheating step of the fuel gas flow 14, the fuel gas flow 14 also undergoes a preliminary desulfurization step so as to form a desulfurized fuel flow. The presence of sulfur in the fuel gas flow 14 is likely to lead to premature wear of the installation, in particular by poisoning the fuel cell unit 30. A desulfurization step may then be necessary to significantly reduce the concentration of sulfur in the fuel gas flow 14, preferentially to completely remove the sulfur present.

Advantageously, the desulfurization step is carried out by introducing the preheated fuel gas flow 14 into the desulfurization unit 90.

Preferentially, after the desulfurization step, the desulfurized flow has a concentration of sulfur smaller than or equal to 1 ppm, more preferentially smaller than or equal to 0.1 ppm.

The desulfurized flow may also undergo, within the pretreatment unit 28, a preliminary prereforming step.

When heated to a high temperature, typically greater than 500-600°C, hydrocarbon compounds used as fuels, in particular C2+ hydrocarbon compounds, are likely to fragment by thermal cracking, thus leading to the unwanted formation of deposits in the installation.

A preliminary pre-reforming step makes it possible to prevent the thermal cracking phenomenon by converting the desulfurized flow into a flow consisting of dihydrogen H₂, carbon monoxide CO, carbon dioxide, water and part of the methane present in the unreacted initial fuel gas. Such conversion is performed e.g. in contact with a catalyst such as nickel.

Preferentially, the pre-reforming step is performed by making the desulfurized flow go through the pre-reforming unit 92. The flow recovered at the outlet of the pre-reforming unit 92 is then further pre-heated in the third heat exchanger system 82 to form a pre-heated fuel feed flow 35.

Then, the pre-heated fuel feed flow 35 is sent to the first heat exchanger system 42, where it is mixed with the recycled flow 38 recovered at the outlet 342 of the carbon capture unit 34 toward the pretreatment unit 28 in order to form a mixed fuel feed flow.

Said mixed fuel feed flow circulates within the tube bundle system of the first heat exchanger system 42 and is further heated therein to form the heated fuel feed flow 50.

The heated fuel feed flow 50 is then sent to the fuel cell unit 30, more precisely to the anode system 104.

The heated fuel feed flow 50 typically has a molar concentration of dihydrogen H₂ ranging from 20% to 50%, preferentially from 30% to 40%. The heated fuel feed flow 50 typically has a molar concentration of carbon monoxide CO ranging from 0% to 15%, preferentially from 0% to 10%. Preferentially, the proportion in the flow of unreacted initial fuel is smaller than 50% (of the molar composition), more preferentially smaller than 30%, in particular between 20% and 30%.

Simultaneously, the oxygen-rich gas flow 16 is heated by flowing through the second heat exchanger system 44.

Advantageously, at least part of the oxygen-rich gas flow 16 is conveyed in the deported tube bundle 75, so that it is pre-heated in the first heat exchanger system 42.

Preferentially, the oxygen-rich gas flow 16 is heated in the second heat exchanger system 44 to a temperature ranging from 500°C to 800°C, preferentially ranging from 600°C to 700°C.

The heated oxygen-rich gas flow 52 is then introduced into the fuel cell unit 30, more precisely into the cathode system 106.

The fuel cell unit 30, fed continuously with the heated fuel flow 50 and the heated oxygen-rich gas flow 52, is then put into operation.

For this purpose, the heated fuel flow 50 is introduced into the fuel cell unit 30, at the inlet 108. In particular, the heated fuel flow 50 is injected at the anode system 104.

The heated oxygen-rich gas flow 52 is introduced at the inlet 110 of the fuel cell unit 30. In particular, the heated oxygen-rich gas flow 16 is injected into the cathode system 106.

When entering the fuel cell unit 30, the heated fuel flow 50 undergoes a first reforming step during which all the initial fuel is converted into a synthesis gas consisting of hydrogen H₂ and carbon monoxide CO.

In contact with the anode system 104, the hydrogen H₂ dissociates into protons H⁺ and electrons. The electrons thus released accumulate at the anode system 104 and are transferred to the cathode system 106 of the unit 30 by means of an external circuit, the displacement of the electrons from the anode system 104 to the cathode system 106 generating the electric current.

At the cathode system 106, the electrons conveyed are fixed by the oxygen O2 present in the heated oxygen-rich gas flow 52, resulting in the transformation of the oxygen O₂ molecules into oxygen ions O²⁻.

The oxygen ions O²⁻ thus formed then flow through the electrolyte and cross over to the side of the anode system 104 where same react with the previously generated H⁺ protons so as to form water H₂O and with carbon monoxide CO so as to form carbon dioxide CO₂.

The anodic gas flow 18 and the cathodic gas flow 20 are then recovered at the outlet of the fuel cell unit 30.

In particular, the cathodic gas flow 20, corresponding to the residual gas flow recovered at the outlet of the cathode 106, is recovered at the outlet 114 of the unit 30. The flow 20 has a reduced concentration of oxygen relative to the initial oxygen-rich gas flow 16. Typically, the cathodic gas flow 38 has a concentration of oxygen smaller than or equal to 20% molar, preferentially from 5% molar to 15% molar.

The cathodic gas flow 20 is then conveyed to the collecting installation 26, by first circulating within the enclosure 440 of the second heat exchanger system 44.

The cathodic gas flow 20 is cooled by flowing through the second heat exchanger systems 44. The cathodic gas flow 20 is first introduced into the second heat exchanger at the inlet 444 and flows in the circulation pipe 442 from bottom to top in crossflow around the tubes 740 of the or each tube bundle 74 extending within the circulation pipe 442.

Heat exchanges take place between the oxygen-rich gas flow 16 flowing inside the tubes 740 of the second heat exchanger system 44 and the cathodic gas flow 20, so that the oxygen-rich gas flow 16 is pre-heated and the cathodic gas flow 20 is cooled, forming a cooled cathodic gas flow 200.

The cooled cathodic flow 200, recovered at the outlet 446 of the second heat exchanger system 44, is then conveyed to the collecting installation 26 for post-treatment or for discharging directly into the atmosphere.

Preferentially, the cathodic gas flow 20 is cooled in the second heat exchanger system 44 to a temperature ranging from 50°C to 250°C, preferentially ranging from 80°C to 150°C.

The anodic gas flow 18 corresponding to the residual gas flow recovered at the outlet of the anode system 104, is recovered at the outlet 112 of the fuel cell unit 30. The flow 18 consists of a mixture of carbon dioxide CO₂, water H₂O resulting from the operation of the fuel cell unit and further of carbon monoxide CO and hydrogen H2 which has not reacted.

Preferentially, at least 30% by volume of the initial synthesis gas is recovered in the anodic gas flow, more preferentially from 30% to 50% by volume.

Preferentially, the anodic gas flow 18 has a concentration of carbon dioxide greater than 10% by volume, more preferentially from 10% to 40% by volume, typically from 20% to 40% by volume.

The anodic gas flow 18 is free of sulfur.

The anodic gas flow 18, recovered at the outlet of the fuel cell unit 30, typically has a temperature greater than 500°C, preferentially ranging from 750°C to 850°C.

The entire anodic gas flow 18, recovered at the outlet 112 of the fuel cell unit 30, is then introduced into the enclosure 420 of the first heat exchanger system 42 in order to be cooled therein by flowing within the circulation pipe 422.

In particular, the anodic gas flow 36 flows in the circulation pipe 442 from bottom to top in crossflow around the tubes 740 of the or each tube bundle 74 in the first heat exchanger system 42 and is cooled by heat exchange with the preheated fuel flow 35 and the recycled flow 38 flowing in the tube bundles 74.

A cooled anodic flow 180 is thus obtained at the outlet 426 of the first heat exchanger 42.

Preferentially, the anodic gas flow 18 is cooled in the first heat exchanger system 42 to a temperature ranging from 50°C to 300°C, preferentially ranging from 75°C to 150°C.

Such embodiment is advantageous in that same can be used for heating the preheated fuel flow 35 and the recycled flow 38, before being introduced into the fuel cell unit 30, and to pre-cool the anodic gas flow 36, by heat integration without requiring external energy input.

The cooled anodic flow 180 is then preferably introduced into the post-treatment unit when it is present.

The cooled anodic flow 180 is then introduced into the carbon capture unit 34 in order to form the recycled flow 38.

The recycled carbon dioxide-depleted flow 38 typically comprises from 10% to 60% by volume of carbon dioxide CO2, preferentially from 20% to 50% by volume.

The recycled flow 38 recovered at the outlet of the carbon capture unit 34 is then injected into the tube bundle system at the top of the first heat exchanger system 42 and is pre-heated therein.

The recycled flow 38 is then mixed with the preheated fuel feed flow 35 in order to form the heated fuel feed flow 50.

Preferentially, the recycled flow 38 represents at least 30% by volume of the heated fuel feed flow 50, more preferentially from 40% to 85% by volume, even more preferentially from 45% to 80% by volume.

Preferentially, the preheated fuel feed flow 35 represents at least 70% by volume of the fuel feed flow, more preferentially from 15% to 60% by volume, even more preferentially from 20% to 55% by volume.

Fuel gas is further injected into the furnace 46 in order to be burned therein.

According to a certain embodiment, a portion of the carbon dioxide flow recovered from the carbon capture unit 34 is further injected into the furnace 46, in particular into the burner 80, in order to be burned with the fuel gas.

Advantageously, a portion 840 of the oxygen-depleted cathodic flow 20 is also injected into the furnace 46, in particular into the burner 80, in order to be burned therein. The other portion of the oxygen-depleted flow 20 is then conveyed to the installation 26 after flowing through the circulation pipe 442.

Preferentially, the portion 840 of the oxygen-depleted cathodic flow 20 injected into the furnace 46 is adjusted in order to maintain excess oxygen in the burner 80, advantageously so that oxygen is maintained to be in excess of 2% by volume.

The installation 10 and the method according to the invention can thus be used for producing an electric current by means of a solid oxide fuel cell unit 30 while reducing the energy required.

In particular, the installation 10 and the method according to the invention make it possible to significantly reduce the energy requirement associated with the preheating of the flows, which feed the fuel cell unit 30, by proposing to re-use a significant portion of the heat emitted during the operation of the fuel cell unit 30. A portion of the heat energy dispersed by the fuel cell unit 30 is thus recovered, thereby increasing the overall efficiency of the system.

By this arrangement, the energy required from the supplemental furnace 46 and the CO₂ emission from said furnace is reduced up to 35-45 % compared to an installation without such arrangement.

The vertically arranged installation of the first and second heat exchanger systems 42, 44 allows an efficient utilization of the heat and the reduction of the temperature of the flows produced by the fuel cell unit 30 as low as around 1 00°C, without requiring additional cooling systems.

The finned tube type of heat exchanger systems 42, 44 and their arrangement in such a way that the anodic and cathodic flows 18, 20 coming from the fuel cell unit 30 efficiently exchange heat with incoming fuel and incoming air in cross current way with enhanced heat transfer, while requiring smaller heat exchange area, compared to shell and tube type heat exchangers.

Such smaller heat transfer area allows to arrange the exchangers in a modular stacked and enclosed structure, eliminating the need of shell for individual exchanger, thereby making it possible to operate at near atmospheric pressure without requiring high thickness otherwise necessary for shell and tube type of exchangers arrangement.

The stacking of the heat exchanger systems takes the benefit of clean exhaust gas free of sulfur, thereby avoiding any sulfur condensation leading to issues like acidic corrosion, and eliminates the need of connecting pipelines between exchanger, thus avoiding any potential for gas/air leak and avoiding heat losses.

The method and the installation according to the invention lead therefore to saving equipment and energy consumption in the overall chain (electricity production, capture) and reduce the overall plot plan area required to accommodate the entire process.

## Claims

1. A fuel cell installation (10) comprising :
- A solid oxide fuel cell unit (30) comprising an anode system (104), a cathode system (106), a first inlet (108) for introducing a heated fuel feed flow (50), a second inlet (110) for introducing a heated oxygen-rich gas flow (52), a first outlet (112) for recovering an anodic gas flow (18), and a second outlet (114) for recovering a cathodic gas flow (20),
- A first heat exchanger system (42) for heating a fuel feed flow, the first heat exchanger system (42) comprising an enclosure (420) defining a vertical circulation pipe (422) for the anodic gas flow (18) and a tube bundle system comprising at least one tube bundle (74) arranged in the circulation pipe (422), the at least one tube bundle (74) comprising a plurality of tubes (740) intended to convey the fuel feed flow through the circulation pipe (422) to the first inlet (108);
- A second heat exchanger system (44) for heating the oxygen-rich gas flow (16), the second heat exchanger system (44) comprising an enclosure (440) defining a vertical circulation pipe (442) for the cathodic gas flow (20) and a tube bundle system comprising at least one tube bundle (74) arranged in the circulation pipe (442), the at least one tube bundle (74) comprising a plurality of tubes (740) intended to convey the oxygen-rich gas flow (16) through the circulation pipe (442) to the second inlet (110);
the first outlet (112) emerging at the bottom of the circulation pipe (422) of the first heat exchanger system (42) so that the anodic gas flow (18) circulates from bottom to top in crossflow through the or each tube bundle (74) of the first heat exchanger system (42),
and the second outlet (114) emerging at the bottom of the circulation pipe (442) of the second heat exchanger system (44), so that the cathodic gas flow (20) circulates from bottom to top in crossflow through the or each tube bundle (74) of the second heat exchanger system (44).

2. The installation (10) according to claim 1, wherein each tube bundle (74) comprises a plurality of rows of tubes (740) arranged above one another.

3. The installation (10) according to claim 1 or 2, wherein the first and/or the second heat exchanger system (42, 44) comprise several tube bundles (74) arranged at different levels located above one another along an elevation axis in the circulation pipe (422, 442).

4. The installation (10) according to any one of claims 1 to 3, wherein the tubes (740) of at least one, preferably each, tube bundle (74) comprise a tube body (742) having an outer surface (743) and a plurality of external fins (745) extending radially from the tube body outer surface (743).

5. The installation (10) according to claim 4, wherein the fins (745) are arranged along the tube body (742) at a constant pitch (p) comprised between 2.5 mm and 10 mm.

6. The installation (10) according to claim 4 or 5, wherein each fin (745) annular plate shape and extends over a fin height (h) comprised between 2 mm and 20 mm.

7. The installation (10) according to any one of the preceding claims, wherein the oxygen-rich gas (16) is air, the installation (10) further comprising a pump and compressor system (24) for conveying atmospheric air into the tube bundle system of the second heat exchanger system (44).

8. The installation (10) according to any one of the preceding claims, wherein the first heat exchanger system (42) comprises a deported tube bundle (75) for conveying the oxygen-rich gas flow (16), said deported tube bundle (75) being received in the first circulation pipe (422).

9. The installation (10) according to any one of the preceding claims, further comprising a carbon capture unit (34) configured to recover at least part of the anodic gas flow (18) at the top of the first heat exchanger system (42) and to inject a recycled flow (38) into the tube bundle system of the first heat exchanger system (42).

10. The installation (10) according to any one of the preceding claims, further comprising a supplemental furnace (46) for preheating a fuel gas flow (14) before its introduction into the first heat exchanger system (42).

11. A method of operating a fuel cell installation (10) according to any one of the preceding claims, comprising the following steps:
- circulating a fuel feed flow and a oxygen-rich gas flow (16) respectively in the tube bundle system of the first and second heat exchanger systems (42, 44) to obtain a heated fuel feed flow (50) and a heated oxygen-rich gas flow (52) ;
- continuously feeding the solid oxide fuel cell unit (30) with the heated fuel feed flow (50) injected into the anode system (104) and with the heated oxygen-rich gas flow (52) injected into the cathode system (106);
- recovering at the first outlet (112) of the fuel cell unit (30) a carbon dioxide-rich anodic gas flow (18) and at the second outlet (114) an oxygen-depleted cathodic gas flow (20);
- circulating the anodic gas flow (18) and the cathodic gas flow (20) in the circulation pipe (422, 442) of respectively the first and second heat exchanger systems (42, 44) from bottom to top in crossflow through the or each tube bundle (74).

12. The method according to claim 11, wherein the heated fuel feed flow (50) and the heated oxygen-rich gas flow (52) are injected in the solid oxide fuel cell unit (30) at a pressure of at most 3 bara (absolute bar), more preferentially ranging from 1 to 2 bara (absolute bar).

13. The method according to claim 11 or 12, wherein the heated fuel feed flow (50) and the heated oxygen-rich gas flow (52) are injected in the solid oxide fuel cell unit (30) at a temperature ranging from 700°C to 900°C.

14. The method according to one of claims 11 to 13, wherein, after circulating in the circulation pipe (442) of the second heat exchanger system (44), at least a portion of the cathodic gas flow (20) is discharged into the atmosphere.

15. The method according to any one of claims 11 to 14, wherein, after circulating in the circulation pipe (422) of the first heat exchanger system (42), the anodic gas flow (18) is collected in a carbon capture unit (34).
